# EUROPEAN PATENT SPECIFICATION

(11) **EP 2 882 010 B1**
(45) Date of publication and mention of the grant of the patent: **24.08.2016**
(21) Application number: 14194815.8
(22) Date of filing: 25.11.2014
(51) Int. Cl.: H01M 2/12, B64D 45/00, H01Q 1/28, H01M 10/052

(54) **Battery compartment ventilation system**
Batteriefachbelüftungssystem
Système de ventilation de compartiment de batterie

(30) Priority: 05.12.2013 US 201361912449 P; 21.11.2014 US 201414550426
(43) Date of publication of application: 10.06.2015
(73) Proprietor: Honeywell International Inc., Morris Plains, NJ 07950 (US)
(72) Inventor: Metz, Dana S., Morristown, NJ 07962-2245 (US); Kenney, Joe, Morristown, NJ 07962-2245 (US); Allen, Jim, Morristown, NJ 07962-2245 (US); Eick, Chris, Morristown, NJ 07962-2245 (US)
(74) Representative: Houghton, Mark Phillip

(56) References cited:
- EP-A1- 2 540 614
- DE-A1-102011 087 198
- DE-C- 718 277
- GB-A- 2 177 546
- US-B1- 7 868 752

## Description

This application claims the benefit of U.S. Provisional Application No. 61/912,449, filed December 5, 2013, and entitled "BATTERY COMPARTMENT VENTILATION SYSTEM," the entire content of which is incorporated herein by reference.

### TECHNICAL FIELD

The disclosure relates to a ventilation system.

### BACKGROUND

In some cases, a system onboard an aircraft may be powered by one or more batteries, such as lithium batteries, which may be housed in a battery compartment. The battery compartment may define a confined space.

Patent document number GB2177546A describes an antenna assembly for a sonobuoy housing consisting of a cap having an antenna mounted thereon. The antenna is partially enclosed by a rigid sleeve mounted to the cap for preventing water from flooding the antenna connection. The sleeve aids in retrieval of the sonobuoy from the water without damaging the antenna. The assembly also includes a switch for activating the sonobuoy, an external connector for attaching a sensor or recharging circuit and a biased one-way valve for venting pressurized gas from the housing.

Patent document number US7868752B1 describes a method of monitoring the position of a vehicle, vessel, rail car, barge or tanker truck that is loaded with bulk or hazardous material. A G.P.S unit is set to send a signal to a radio transmitter if the unit moves beyond a maximum permissible distance (for example, 50 feet or more). An oxygen sensor can be used to send a signal to a radio transmitter if oxygen levels fall below a selected minimum concentration. The radio transmitter can send the message to a tugboat crew, police department, fire department, company headquarters, civil defense office or other personnel if either of the unit has moved beyond the selected maximum travel distance or if oxygen levels fall below a minimum concentration. In addition to the radio transmission of oxygen concentration data and/or G.P.S position data, visible or audible alarms can be used such as strobe light, horn or the like. Also disclosed is a system for concealment of chemical and/or biological sensors in a building for urban or industrial environments.

Patent document number EP2540614A1 describes an air intake device for a submarine. The air intake device comprises a first fixed member connected to the submarine hull and a second member which is telescopically movable relative to the first member to rise up with an upper end of it above the water's surface to allow air to be taken in from the atmosphere during navigation of the submarine at periscope depth, the movable member mounting at its upper end a radar device designed to emerge from the water together with the selfsame movable member.

Patent document number DE102011087198A1 describes a battery cell module which has battery cells i.e. lithium-ion-cells, comprising a degassing opening, and a gas receiving area attached to the cells and provided for permanently receiving gas which has escaped from the cells. The receiving area has a relief valve, and loaded with vacuum. A pressure-controlled valve is arranged between the receiving area and the opening. The cells are arranged in a housing, where the housing is connected with the receiving area over a wire. An absorption medium is arranged in the receiving area.

### SUMMARY

The present invention in its various aspects is as set out in the appended claims.

The disclosure describes example devices, systems, and techniques for venting gases out of a battery compartment through an exit port in a housing of an antenna, where the gases may be generated when a battery inside the battery compartment fails. The battery compartment may be, for example, in an aircraft and the housing of the antenna may be at least partially on an external surface of the aircraft. In some examples, a vent line extends between the battery compartment and the exit port, thereby defining a passageway through which gases in the battery compartment can exit the battery compartment and, in some cases, exit a fuselage of the aircraft.

In one aspect, the disclosure is directed to a system comprising a battery compartment; an antenna assembly comprising: an antenna housing defining an exit port, wherein the antenna housing is outside of the battery compartment; an antenna housed by the antenna housing; and a vent line extending from the battery compartment to the exit port, wherein the vent line defines a passageway through which gases in the battery compartment exit the battery compartment.

In another aspect, the disclosure is directed to a method of forming a battery ventilation system, the method comprising defining an exit port in an antenna housing, wherein the antenna housing houses an antenna; and positioning a vent line between a battery compartment and the exit port, wherein the battery compartment contains a battery, and wherein the vent line defines a passageway through which gases in the battery compartment exit the battery compartment.

In another aspect, the disclosure is directed to a battery compartment; an antenna assembly comprising: an antenna housing defining an exit port, wherein the antenna housing is outside of the battery compartment; an antenna housed by the antenna housing; and means for venting gases out of the battery compartment and to the exit port.

The details of one or more examples of the disclosure are set forth in the accompanying drawings and the description below. Other features, objects, and advantages of the disclosure will be apparent from the description and drawings, and from the claims.

### BRIEF DESCRIPTION OF DRAWINGS

FIG. 1 is a conceptual diagram illustrating an example device with a battery compartment ventilation system, in accordance with one or more aspects of the present disclosure.
FIG. 2 is a conceptual diagram illustrating an example emergency locator transmitter including a battery compartment ventilation system, in accordance with one or more aspects of the present disclosure.
FIG. 3 is a conceptual diagram illustrating an example aircraft that includes an emergency locator transmitter and a battery compartment ventilation system, such as the emergency locator transmitter and the battery compartment ventilation system shown in FIG. 2, in accordance with one or more aspects of the present disclosure.
FIGS. 4-9 are graphs illustrating experimental results that indicate the effects of a battery compartment ventilation system, such as the example systems described above with respect to FIGS. 1 and 2, on the temperature and pressure inside of a battery compartment after one or more batteries have short circuited.
FIGS. 10-16 are graphs illustrating experimental results that indicate the effects of a battery compartment ventilation system, such as the example systems described above with respect to FIGS. 1 and 2, on the temperature and pressure inside of a battery compartment after one or more batteries have been overcharged.
FIG. 17 is a flow diagraph illustrating an example process of forming a battery ventilation system to remove extraneous pressure from a device when a lithium battery fails, in accordance with one or more aspects of the present disclosure.

### DETAILED DESCRIPTION

Failure of some types of batteries, such as lithium batteries, in a confined space may produce gases that are high in temperature and pressure, and may affect air quality in the confined space. In some cases, such as when a battery is located onboard an aircraft, it may be desirable to vent the gases outside of the confined space of the battery compartment, e.g., in order to help maintain a satisfactory air quality inside of the aircraft, as well as to help prevent any high temperature or high pressure events. Devices, systems, and techniques described herein are configured to vent gases out of a battery compartment, which may help minimize any adverse effects of the gases on the surrounding components.

In some examples, the devices, systems, and techniques described herein may be used to vent gases generated by one or more batteries (e.g., lithium batteries) of a device onboard an aircraft. The device can be, for example, an emergency locator transmitter (ELT) that is powered by one or more lithium batteries, which may be contained (also referred to herein as "housed") in a battery compartment that substantially fully encloses (e.g., fully enclose or nearly fully enclose) the one or more lithium batteries. Configuring the ELT and aircraft with a system for venting the gases produced by a failing lithium battery out of the aircraft may be particularly advantageous due to the high temperature gases produced by the failing lithium battery. The high temperature gases within the confined space of the battery compartment may result in an increased pressure in the battery compartment, as well as an increased temperature in the battery compartment.

While lithium batteries are primarily referred to throughout the remainder of the disclosure, the devices, systems, and techniques described herein for venting gases out of a battery compartment may be used with battery compartments that include other types of batteries.

In some examples described herein, a system includes a lithium battery in a battery compartment, a housing defining an exit port, and a vent line extending from the battery compartment to the exit port. The battery compartment can be, for example, a battery compartment of an ELT. The vent line defines an air passageway through which gases in the battery compartment may exit the battery compartment. The vent line is fluidically connected to the exit port, which defines an opening through which the gases may exit the vent line. The gases may flow through the vent line from the battery compartment to the exit port in an attempt to equilibrate pressure within the battery compartment with the environment external to the housing. In some examples, the exit port is open to the external environment (e.g., outside the housing, the outdoors, or both) in order to help the vent line remove gases generated within the battery compartment and move the gases to air outside of the housing. In this way, the vent line can be configured to maintain air quality within the housing. In some examples, the housing includes an aircraft structure (e.g., an aircraft fuselage) and the exit port is defined by a skin of the aircraft. In other examples, the housing includes another structure, such as an externally mounted antenna housing, as described below.

In some examples, the vent line is substantially continuous from the battery compartment to the exit port in the housing. In other examples, the vent line includes a plurality of different portions, such as two or more different lines connected end-to-end. The vent line can be formed from any suitable material configured to handle the expected pressure and temperature generated by the gases produced by a failing lithium battery. In some examples, the vent line is formed from stainless steel (e.g., a braided tube or a solid tube). The vent line can be flexible or substantially rigid, depending on path the vent line is expected to traverse. In addition, the vent line can be configured, or may be positioned within the housing, such that fluid that may collect in the vent line does not flow back into the battery compartment, housing, or both.

Some devices, such as ELTs, include an antenna assembly that includes antenna housing that is at least partially external to the aircraft (e.g., mounted on an external surface of the aircraft), where the antenna housing houses an antenna with which a signal may be transmitted. For instance, an ELT may be configured to transmit a signal in response to detecting a high impact event, such as a crash. When the ELT is installed on an aircraft, the antenna housing can be mounted to a pressure vessel (e.g., a fuselage) of the aircraft, such that at least part of the housing is external to the pressure vessel, while the remainder of the ELT is mounted inside the pressure vessel. Thus, the antenna housing provides a component through which a vent line from a battery compartment of the ELT to the outside of the aircraft may be routed. The antenna housing can be, for example, fully external to the aircraft, or may be partially external to the aircraft.

In some examples, the vent line extends from the battery compartment to an exit port defined by a portion of the antenna housing that is external to the aircraft, the exit port being on an external surface of the aircraft. The vent line provides a passageway through which gases produced by a failing lithium battery (or another type of battery) may exit the battery compartment, and, therefore, the aircraft.

When a vent line is incorporated in the antenna housing or otherwise extends through an aircraft skin, relatively high pressure gases generated as a result of failure of a lithium battery can be efficiently vented outside the aircraft without incorporating another access port through the pressure vessel of the aircraft. In the case of the antenna housing, the vent line may be routed through the access port already being used by the antenna housing, e.g., to route electrical wires from the antenna housed by the antenna housing to electronics within the aircraft pressure vessel. This feature may help minimize design changes to the current design of the ELT (or other devices), aircraft, or both.

In the event of a lithium battery failure or other high pressure event in the confined space of the ELT, a vent line to the ELT antenna housing may provide a means of reducing the pressure within the ELT (e.g., within the battery compartment of the ELT) in the event of a battery failure, safely venting the high pressure gases over board. The design may reduce the need to redesign the ELT to withstand the high pressure associated with a battery failure, which may be several hundred pounds per square inch. In some cases, there may be no need to add another access port through the aircraft fuselage as the ELT antenna housing is already accessible from the inside of the aircraft due to the wire that connects the antenna to the ELT. This may eliminate a large design effort on the part of the airframe manufacturer, as well as any modification to the aircraft. This design may also require minimal changes by the airframe manufacturer as all of the required changes would be made to the ELT system hardware.

In some examples, a vent line includes a first portion connected at a first end to a battery compartment and connected at a second end to a second portion of the vent line that begins at an interior side of the antenna housing. The first portion can be routed through the airframe of an aircraft. The interior side of the antenna housing is, for example, the side of the antenna housing facing the aircraft. The second portion of the vent line is configured to define an air passageway from the interior of the antenna housing to an exterior surface of the antenna housing (which faces the outside environment). The routing of the second portion of the vent line through the antenna housing can be designed such that fluid that may collect in the vent line does not flow back toward the ELT or otherwise into the aircraft pressure vessel.

In some examples, the vent line includes a mechanism configured to control when the vent line is open to the external environment (through the antenna housing). For example, the vent line may include rupture disk configured to rupture at a predetermined pressure. The rupture disk can be included at, for example, the end of the first portion of the antenna housing. In other examples, the rupture disk can be located at any other suitable location within the vent line, e.g., any suitable location between the battery compartment and the exit port defined by the antenna housing. In the event of a lithium battery failure, a pressure in the battery compartment greater than a particular threshold value causes the rupture disk to fail, allowing the gases to exit the aircraft through the antenna housing via the vent line, resulting in lower pressure within the ELT. Further examples of how this is accomplished are described with respect to the figures below.

While a vent line incorporated into an antenna housing is primarily described below, in other examples, a venting system may not be incorporated into an antenna housing, but, instead, may define a passageway from the (internal space of the) battery compartment to an exit port defined in an another housing, such as an aircraft pressure vessel. The exit port in the aircraft pressure vessel may be a terminal port, through which the gases are finally removed from the aircraft (rather than traversing through another structure, such as an antenna housing as in some other examples). Indeed, the vent line may be configured to vent gases generated within the battery compartment, e.g., as a resulting of a failing lithium battery, to the outside of an aircraft using any route through the aircraft skin.

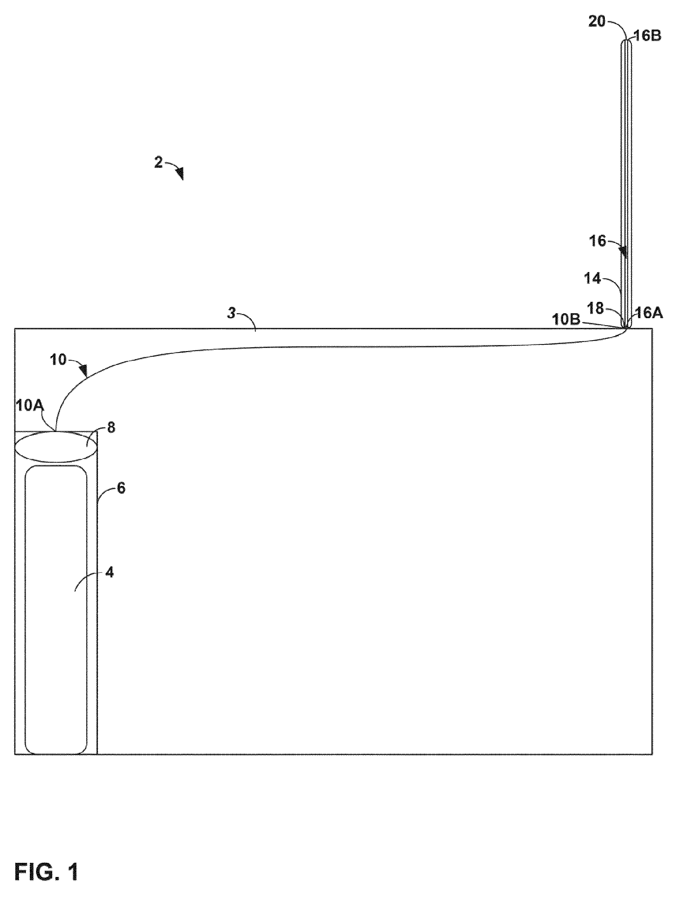

FIG. 1 is a conceptual diagram illustrating an example device 2 including an example battery compartment ventilation system, in accordance with one or more aspects of the present disclosure. Device 2 comprises a battery compartment 6, and a vent line including a first portion 10 and a second portion 16. In the example shown in FIG. 1, battery compartment 6 and first portion 10 of the vent line are housed within an outer housing 3, which can be, for example, a chassis of an ELT device. Device 2 further includes antenna housing 14, which defines an exit port 20. In some examples, exit port 20 may range from about 0.10 inches (about 2.5 millimeters (mm)) in diameter to about 0.50 inches (about 13 mm) in diameter, such as about 0.35 mm (about 9 mm) to about 0.50 inches (about 13 mm).

Although not shown in FIG. 1, antenna housing 14 may house an antenna. Lithium battery 4 resides in battery compartment 6. In some examples, battery compartment 6 may house multiple lithium batteries. In other examples, battery compartment 6 may house only one lithium battery. When lithium battery 4 fails, it produces extraneous gases, raising the pressure inside battery compartment 6. This failure of lithium battery 4 could be a short circuit, an overcharge, or a physical alteration of the lithium battery, among other things.

In the example shown in FIG. 1, antenna housing 14 is attached to an external surface of outer housing 3. The vent line of the battery compartment 6 venting system shown in FIG. 1 include one or more portions. In some examples, the vent line may range from about 0.10 inches (about 2.5 mm) in cross-sectional diameter (take in a direction perpendicular and transverse to the longitudinal axis of the vent line) to about 0.50 inches (about 13 mm) in cross-sectional diameter, such as about 0.35 mm in cross-sectional diameter to about 0.50 inches in cross-sectional diameter. The cross-sectional diameter examples may, for example, correspond to the inner lumen defined by the vent line, through which the gases may traverse. In other examples, the cross-sectional diameter may correspond to the total outer diameter.

In the example shown in FIG. 1, the vent line includes first portion 10 and second portion 16, which together define a passageway through which gases within battery compartment 6 may exit battery compartment 6 and outer housing 3. First portion 10 of the vent line is connected at first end 10A to battery compartment 6 and connected at second end 10B to first end 16A of second portion 16 of the vent line, which is positioned in antenna housing 14. First end 16A of second portion 16 of the vent line is positioned at an internal surface of antenna housing 14, which is the surface facing outer housing 3, and, in the example shown in FIG. 1, the surface connected to outer housing 3. Second end 16B of second portion 16 of the vent line is connected to exit port 20 defined by antenna housing 14. Port 20 is an opening through which gases may exit second portion 16 of the vent line.

In some examples, the vent line includes a plurality of different portions (e.g., portions 10 and 16 of FIG. 1), such as two or more different lines connected end-to-end. In other examples, the vent line is substantially continuous from battery compartment 6 to exit port 20 in the housing. The vent line can be formed from any suitable material configured to handle the expected pressure and temperature generated by the gases produced by a failing lithium battery. In some examples, the vent line is formed from stainless steel (e.g., a braided tube or a solid tube). The vent line can be flexible or inflexible, depending on the particular applications, such as the location within an aircraft that the vent line traverses or the design considerations for the vent line material (e.g., the temperatures and pressures the vent line can withstand).

In the example shown in FIG. 1, device 2 includes rupture disk 8 that is configured to close first end 10A of vent line 10, such that gases within compartment 6 stay within compartment 6 while rupture disk 8 is in an unruptured state. Rupture disk 8 is configured to rupture when the pressure within battery compartment 6 is greater than a predetermined threshold. For instance, the predetermined threshold may vary between 20 to 50 pounds per square inch gauge. Rupture disk 8 may be made of any material that could be damaged by a sufficient amount of pressure. For example, rupture disk 8 may be made of ceramic or thin steel. In some examples, rupture disk 8 may further have slots cut into it in order to configure rupture disk 8 to fail at a certain pressure. When ruptured, rupture disk 8 exposes vent line 10 to an internal space of battery compartment 6, thereby allowing gases within the internal space of battery compartment 6 to exit battery compartment 6 via vent line 10. In some examples, the device also comprises rupture disk 18 located at the connection of second end 10B of first portion 10 and first end 16A of second portion 16 of the vent line 10. Rupture disk 18 is configured to rupture when the pressure within first portion 10 of the vent line exceeds a predetermined threshold value. In other examples, device 2 does not include rupture disk 18.

Exit port 20 is an opening in antenna housing 14 that allows for the escape of any gases that may be contained in battery compartment 6 to the outside environment. Exit port 20 may be created by cutting a hole into antenna housing 14, drilling a hole into antenna housing 14, chemical etching into antenna housing 14, or by any other suitable process that may create a hole in antenna housing 14. Exit port 20 could have any suitable cross-sectional shape, such as a circle, square, oval, triangle, etc.

When lithium battery 4 fails, gases are produced within compartment 6. When the pressure within compartment 6 exceeds the predetermined threshold associated with rupture disk 8, rupture disk 8 may be damaged (thereby rupturing disk 8), thereby exposing an opening between compartment 6 and first portion 10 of the vent line. Once rupture disk 8 is ruptured, an air passageway for relieving the pressure within compartment 6 is opened, thereby allowing gases to escape from compartment 6 via first portion 10 of the vent line. The gases may traverse through first portion 10 to second portion 16, and out port 20. In this way, gases produced by the failed lithium battery 4 can escape overboard device 2, which may help stabilize the pressure and temperature inside battery compartment 6 to a safe level.

In other examples, instead of, or in addition to one or both rupture disk 8 or 18, device 2 includes a valve configured to expose vent line 10 to an internal space of battery compartment 6 when the pressure within battery compartment 6 is greater than or equal to a predetermined threshold value. At the predetermined threshold value, the valve is configured to open (e.g., in response to the force resulting from the pressure), thereby allowing passage of gases within battery compartment 6 to exit device 2 via the vent line. In this way, the valve may be referred to as a pressure relief valve. For example, the valve may be is configured to open, thereby allowing passage of gases within battery compartment 6 to exit battery compartment 6 via first portion 10 of the vent line, and then subsequently through second portion 16 of the vent line to port 20 defined by antenna housing 14.

In some examples, the valve is configured to close in response to the pressure within battery compartment 6 is lower than or equal to the predetermined threshold value. In addition, in some examples, the valve is configured to open completely in response to the pressure within battery compartment 6 being greater than or equal to a predetermined threshold value. In other examples, the valve may open proportionally as the increasing pressure overcomes the force (e.g., applied by a spring or another mechanism) holding the valve closed.

The valve can be any suitable valve, such as a spring-loaded valve, where the spring acts to seal a hinged lid or other moveable part until the pressure within the battery compartment is high enough to overcome the spring pressure. The valve may be mechanically configured to automatically open (e.g., a spring-loaded valve), or may be an electronically actuated valve controlled to open and close by another device, e.g., any suitable processing device, in response to pressure sensed by sensors within the battery compartment.

Techniques of this disclosure further include a process for forming the battery ventilation system shown in FIG. 1. For example, exit port 20 is defined in antenna housing 14. In some examples, antenna housing further contains an antenna. Further, the vent line formed by first portion 10 and second portion 16 is disposed between battery compartment 6 and exit port 20. The vent line defines a passageway through which gases in battery compartment 6 may exit battery compartment 6. In some examples, battery compartment 6 may contain battery 4. In some examples, the gases are generated by battery 4, and battery 4 may be a lithium battery.

In some examples, device 2 is an ELT or any other device which is powered by lithium batteries and includes an antenna housing that is at least partially external to an aircraft or other vehicle or component (e.g., the antenna housing may be mounted on an exterior surface of an aircraft). Lithium battery 4 could be any battery that contains lithium, including button cell batteries, AA batteries, AAA batteries, and 9V batteries, among other things. Rupture disks 8 and 18 could be constructed of any material or combination of material which can be damaged when the pressure against it reaches a predetermined point.

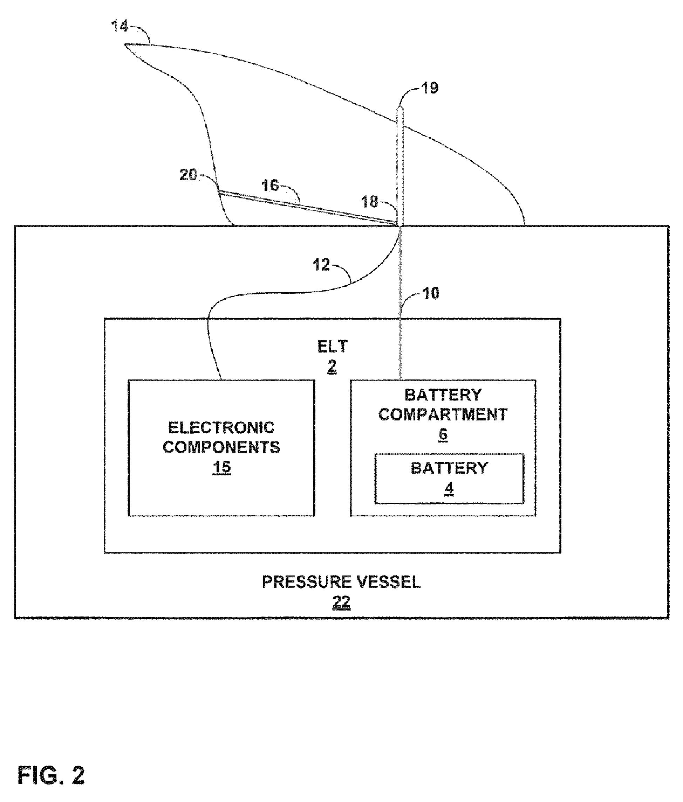

In some examples, device 2 of FIG. 1 may be an emergency locator transmitter (ELT). FIG. 2 is a conceptual illustrates of an example configuration in which device 2 is an ELT 2 including a battery compartment ventilation system, in accordance with one or more aspects of the present disclosure. ELT 2 comprises a battery compartment 6 that is positioned in a pressure vessel 22 of an aircraft, which may be an aircraft fuselage in some examples. ELT 2 includes antenna housing 14, which is attached to the outside of pressure vessel 22. In the example shown in FIG. 2, antenna housing 14 has a shark fin shape and contains antenna 19.

ELT 2 may further include other electronic components 15, such as a processor or a transmitter unit. These devices may perform functionality related to transmitting signals via antenna 19 or any other function suitable of ELT 2. ELT 2 and electronic components 15 may be operatively connected to battery 4. Electronic components 15 are further operatively connected to antenna 19 via wires 12 such that electronic components 15 may utilize antenna 19 to transmit signals as part of the functionality of ELT 2.

The vent line includes a first portion 10 connected at a first end to battery compartment 6 and connected at a second end to a second portion 16 of the vent line that begins at an interior side of antenna housing 14. First portion 10 can be routed through the airframe of an aircraft. The interior side of antenna housing 14 is, for example, the side of antenna housing 14 facing the aircraft. The second portion 16 of the vent line is configured to define an air passageway from the interior of antenna housing 14 to an exterior surface of antenna housing 14 (which faces the outside environment). The routing of the second portion 16 of the vent line through antenna housing 14 can be designed such that fluid that may collect in the vent line does not flow back toward ELT 2 or otherwise into aircraft pressure vessel 22.

In the event of a failure of battery 4 or other high pressure event in the confined space of battery compartment 6, the vent line to antenna housing 14 may provide a means of reducing the pressure within ELT 2 (e.g., within battery compartment 6 of ELT 2) in the event of a battery failure, safely venting the high pressure gases over board. The design of ELT 2, as shown in FIG. 2, may reduce the need to redesign ELT 2 to withstand the high pressure associated with a battery failure, which may be several hundred pounds per square inch. In some cases, there may be no need to add another access port through pressure vessel 22 as antenna housing 14 is already accessible from the inside of the aircraft due to wires 12 that connects antenna 19 to ELT 12. This may eliminate a large design effort on the part of the airframe manufacturer, as well as any modification to the aircraft. This design may also require minimal changes by the airframe manufacturer as all of the required changes would be made to the ELT system hardware.

Exit port 20 defined by antenna housing 14 can be positioned at any suitable location of housing 14. In some examples, as shown in FIG. 2, exit port 20 may be positioned in a low pressure region, such as on a trailing edge of antenna housing 14. By positioning exit port 20 in a low pressure region of antenna housing 14, gases may be more effectively vented out of battery compartment 6 and outside of the aircraft.

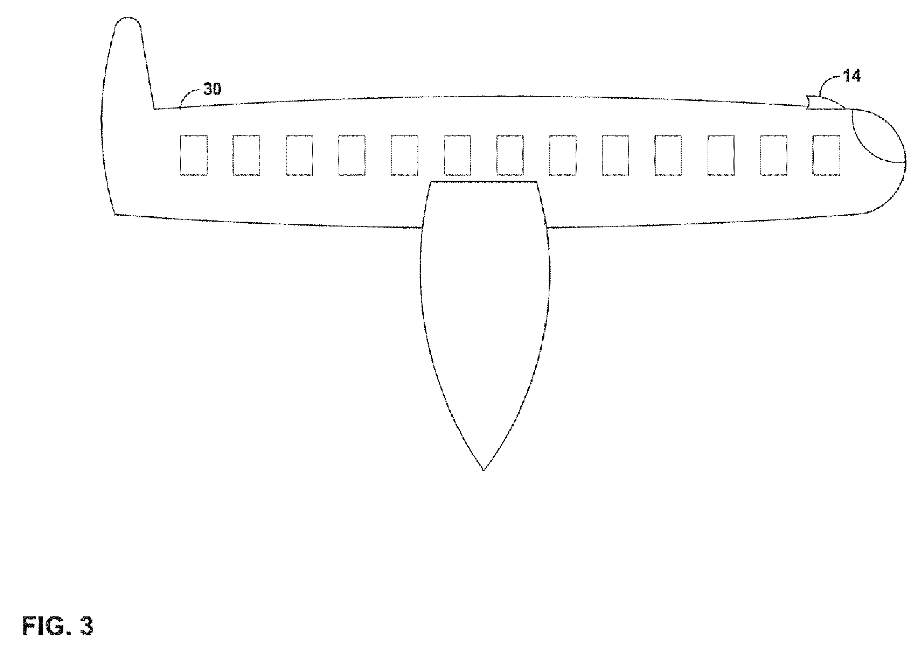

FIG. 3 is a conceptual diagram illustrating an example aircraft 30 that includes an ELT 2 shown in FIG. 2. Aircraft 30 may be a passenger airplane, a military aircraft, a private airplane, a helicopter, a drone, or any other type of vehicle that is configured for flight. In the example shown in FIG. 3, antenna housing 14 is mounted on an external surface of aircraft 14. As discussed above with respect to FIG. 2, housing 14 may define exit port 20 that is connected to a vent line that extends from battery compartment 8 of an ELT. In this way, antenna housing 14 of an existing ELT may be used to vent gases out of a battery compartment inside aircraft 30 and out of aircraft 30.

In some examples, housing 14 may have any shape suitable for a housing including an antenna and the exit port. In other examples, housing 14 may have an aerodynamic shape, such as the shark fin shape depicted in FIG. 3. By having an aerodynamic shape, housing 14 may not affect the performance of aircraft 30 during air travel. Further, by being aerodynamic, a region of low pressure is created on the trailing edge of housing 14. If the exit port is located on this trailing edge in the region of low pressure, gases from inside the exit port and the vent line can more freely escape housing 14 and aircraft 30. Although housing 14 is depicted as a shark fin shape, housing 14 may be another aerodynamic shape, such as a teardrop, parabolic, conical, or dart-like.

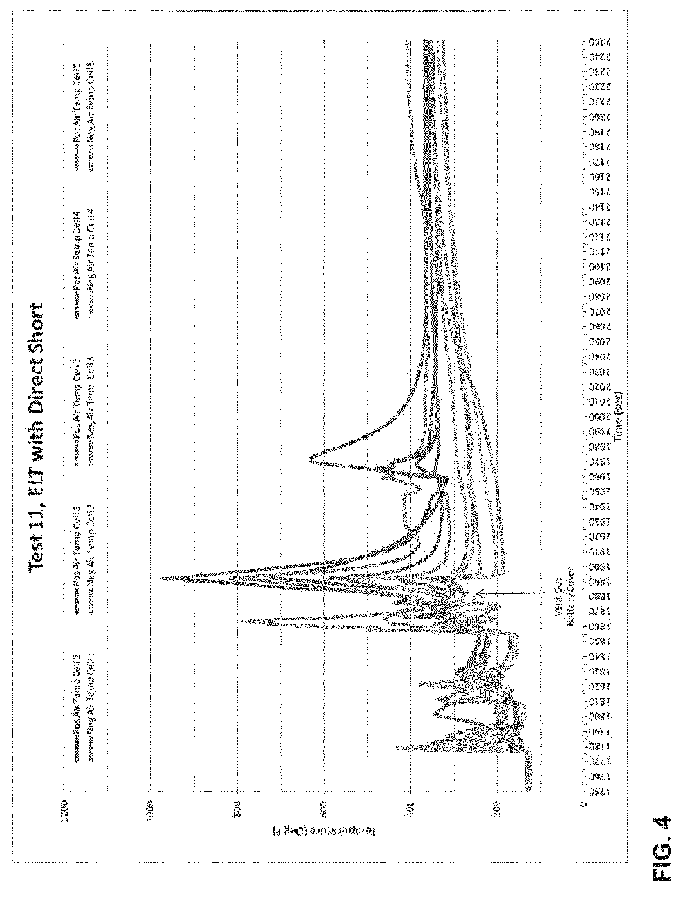

FIGS. 4-9 are graphs illustrating experimental results that indicate the effects of a battery compartment ventilation system, such as the example systems described above with respect to FIGS. 1-3, on the temperature and pressure inside of a battery compartment. The experimental results shown in FIGS. 4-9 were conducted during a test, referred to herein as "Test 11," on an example ELT device including five lithium battery cells. During Test 11, the initial cell voltages of the lithium battery cells of the ELT device were measured, as well as changes in the voltage throughout the experiment, including the thermal event. Failure of the battery cells was achieved by direct short circuiting of the battery cells. During the thermal event of the short circuit, the voltages rose and fall in a very volatile manner. The set-up of the ELT device and instrumentation used to generate the experimental results for Test 11 includes pressure sensors and temperature controls placed on the ELT device and surrounding objects, such as support rails and aim modules. Temperature controls were placed on each side of the ELT device and on the battery cover. Pressure sensors were placed on the endcap of the ELT device. Further, temperature controls and pressure sensors were placed within the battery compartment. For instance, for Test 11, a metal temperature control was placed on each battery, an air temperature control was placed under the negative terminal of each battery, and a single metal temperature control was placed on each side of the battery compartment. A pressure sensor was also placed on each battery in the battery compartment.

The experimental results shown in FIGS. 4-9 indicate that venting gases within a battery compartment, the gases resulting from failure of one or more batteries (or battery cells) within the battery compartment, may help reduce the temperature within the battery compartment, the temperature of components surrounding the battery compartment, and may help reduce the pressure within the battery compartment.

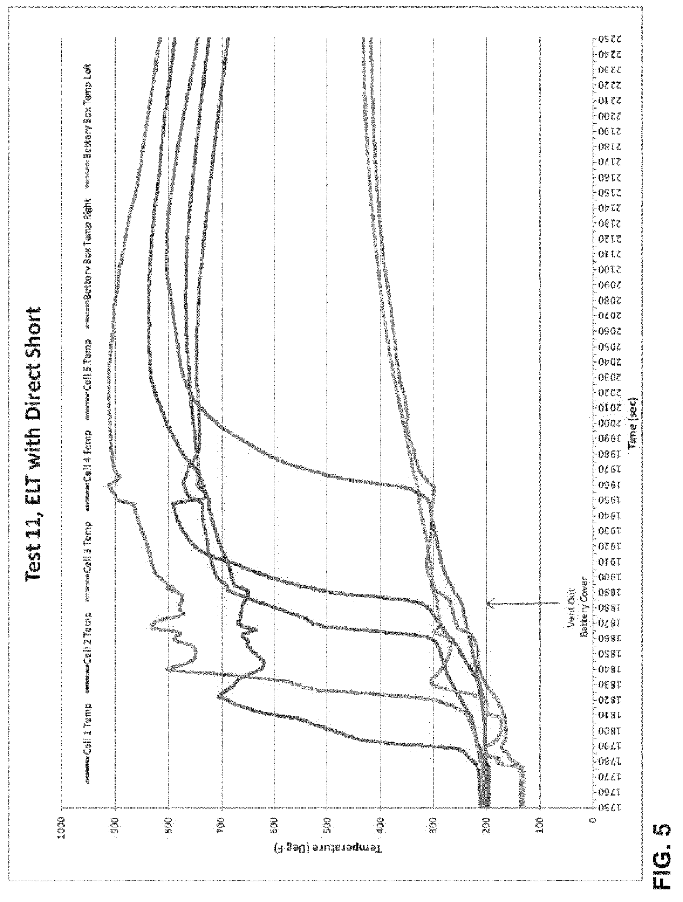

FIGS. 4 and 5 are each graphs illustrating a change in air temperature within the battery compartment prior to and after failure of one or more lithium battery cells (a key for identifying cells 1-5 is provided at the top of FIG. 4). As shown in FIGS. 4 and 5, the venting of gases out of the battery compartment (shown at the time indicated by "Vent Out Battery Cover) helped to decrease the temperature in the battery compartment (also referred to as a "battery box"), as well as the temperature of the battery cells. By decreasing the temperature, the ELT device and the surrounding structures are at less of a risk of adverse effects resulting from a failure of one or more batteries or battery cells.

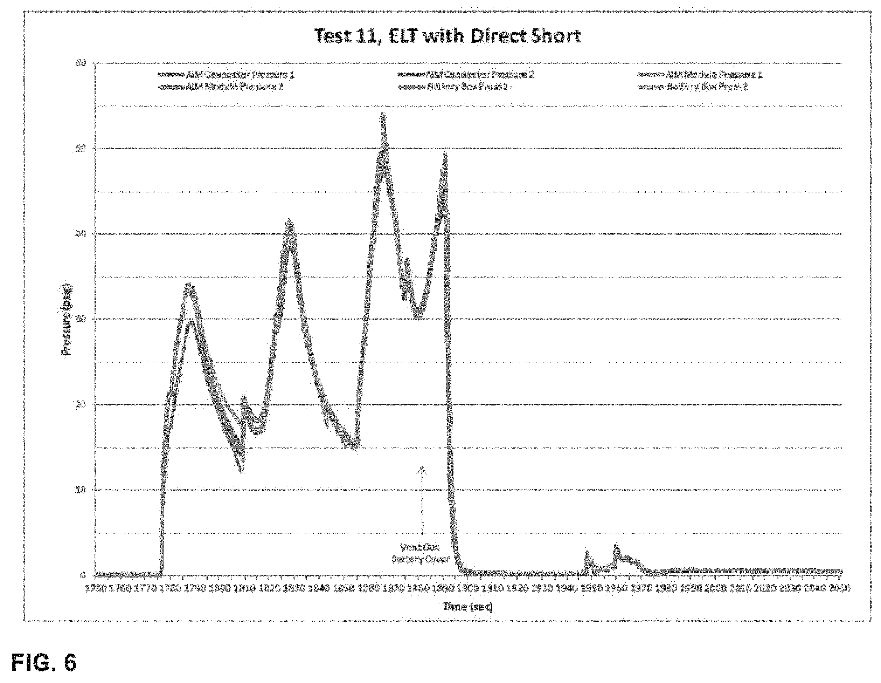

FIG. 6 is a graph illustrating a change in pressure within the battery compartment, as well as the pressure at the aircraft interface module (AIM) of the ELT (with which the ELT is electrically connected to electronic of the aircraft) prior to and after failure of one or more lithium battery cells. As shown in FIG. 6, the venting of gases out of the battery compartment (shown at the time indicated by "Vent Out Battery Cover") helped to decrease the pressure in the battery compartment (also referred to as a "battery box"), as well as at the pressure at the AIM. By decreasing the pressure, the ELT device and the surrounding structures are at less of a risk of sustaining significant damage as the result of a failure of one or more batteries or battery cells.

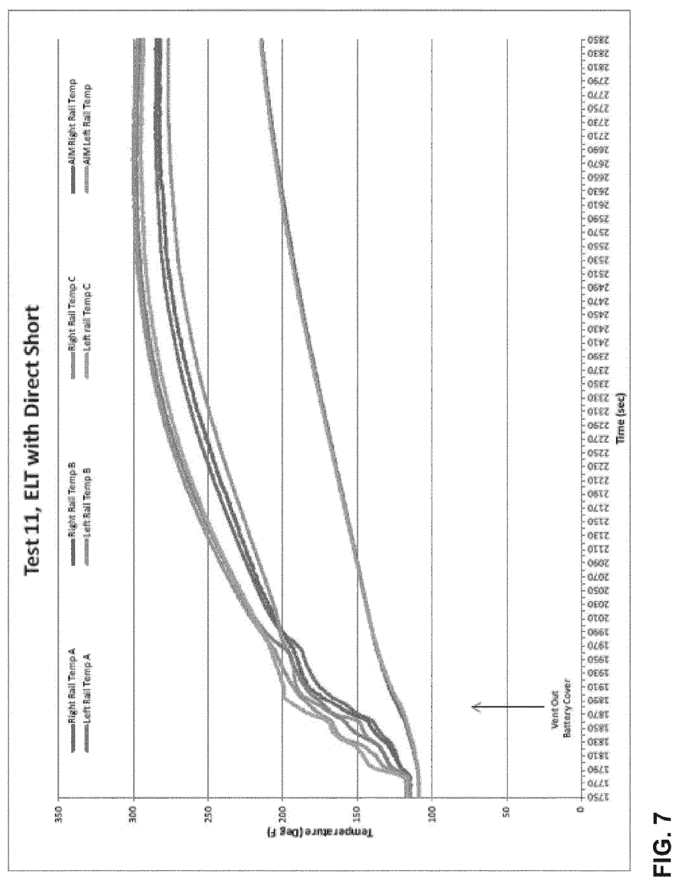

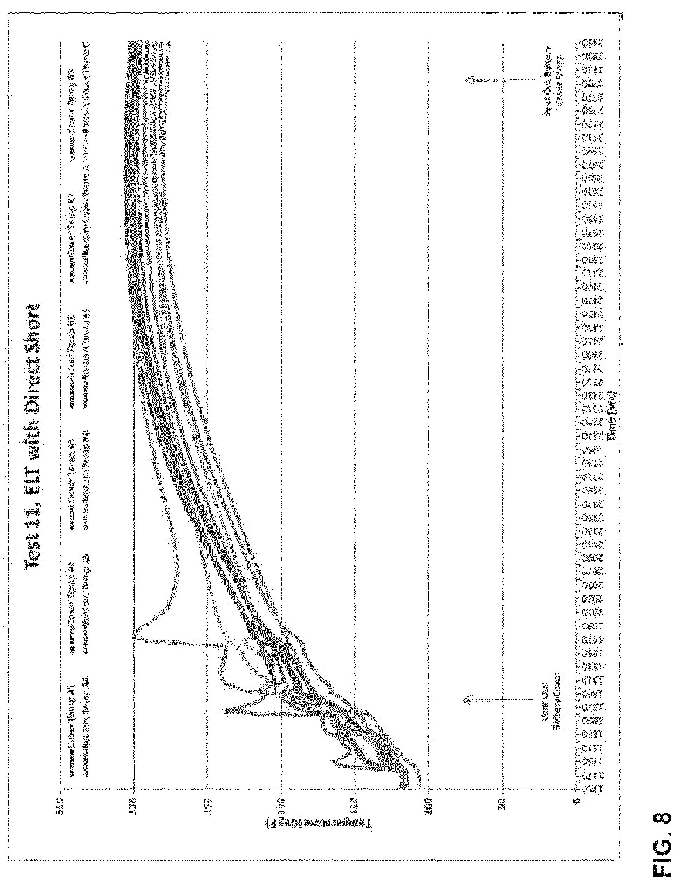

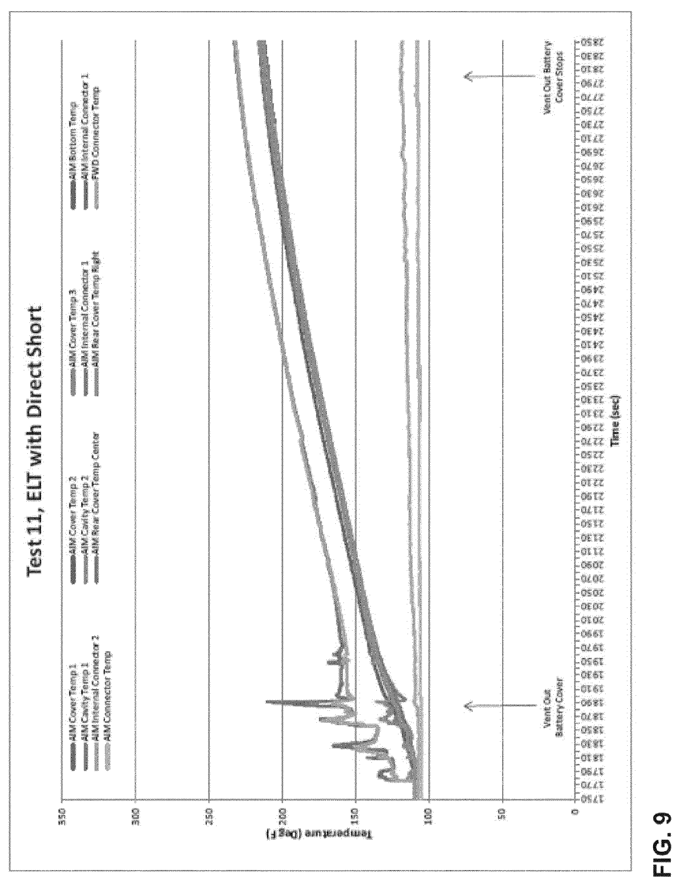

FIG. 7 is a graph illustrating temperature of objects surrounding the ELT module prior to and after failure of one or more lithium battery cells. FIG. 8 is a graph illustrating the temperature of the cover, the bottom, and the battery cover of the ELT prior to and after failure of one or more lithium battery cells. FIG. 9 is a graph illustrating the change in temperature of various components of the ELT extended to when the pressure inside the battery compartment has stabilized after ventilation of the battery compartment. At a certain voltage of a battery when a battery failure event occurs, temperatures of the battery and battery cells may be controlled by venting, such that venting may be used to control the temperature inside of a battery compartment after failure of the battery. As shown in FIGS. 7-9, when gases are vented out of the battery compartment upon failure of the battery, temperatures of the ELT and surrounding objects are controlled in such a way that the risk of extraneous damage being caused to the ELT or the surrounding objects is minimized.

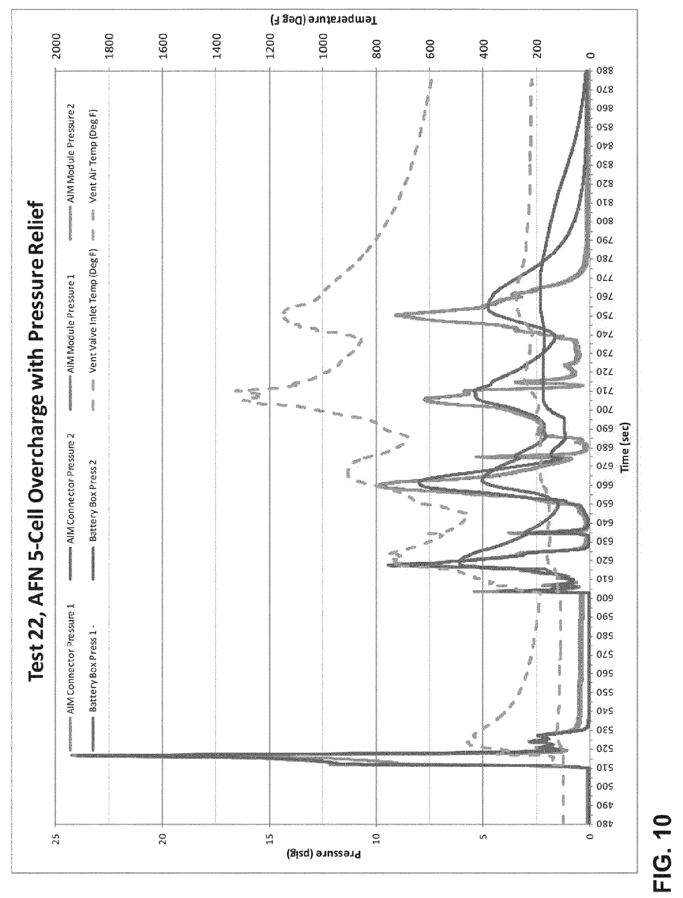

FIGS. 10-16 are graphs illustrating experimental results that indicate the effects of a battery compartment ventilation system, such as the example systems described above with respect to FIGS. 1-3, on the temperature and pressure inside of a battery compartment. The experimental results shown in FIGS. 10-16 were conducted during a test, referred to herein as "Test 22," on an example ELT device including five lithium battery cells. During Test 22, failure of the battery cells was achieved by overcharging of the battery cells. A battery including five battery cells was used in the experimental set-up of Test 22, alone with a pressure relief valve installed in the battery compartment in which the battery was housed.

The experimental results shown in FIGS. 10-16 indicate that venting gases within a battery compartment, the gases resulting from failure of one or more battery (or battery cells) within the battery compartment, may help reduce the temperature within the battery compartment, the temperature of components surrounding the battery compartment, and may help reduce the pressure within the battery compartment.

FIG. 10 is a graph illustrating various pressures inside a test battery compartment when a lithium battery in the battery compartment experiences an overcharge. As shown in FIG. 10, the venting of gases out of the battery compartment helped to decrease the pressure in the battery compartment (also referred to as a "battery box"), as well as at the pressure at the AIM. By decreasing the pressure, the ELT device and the surrounding structures are at less of a risk of sustaining significant damage as the result of a failure of one or more batteries or battery cells.

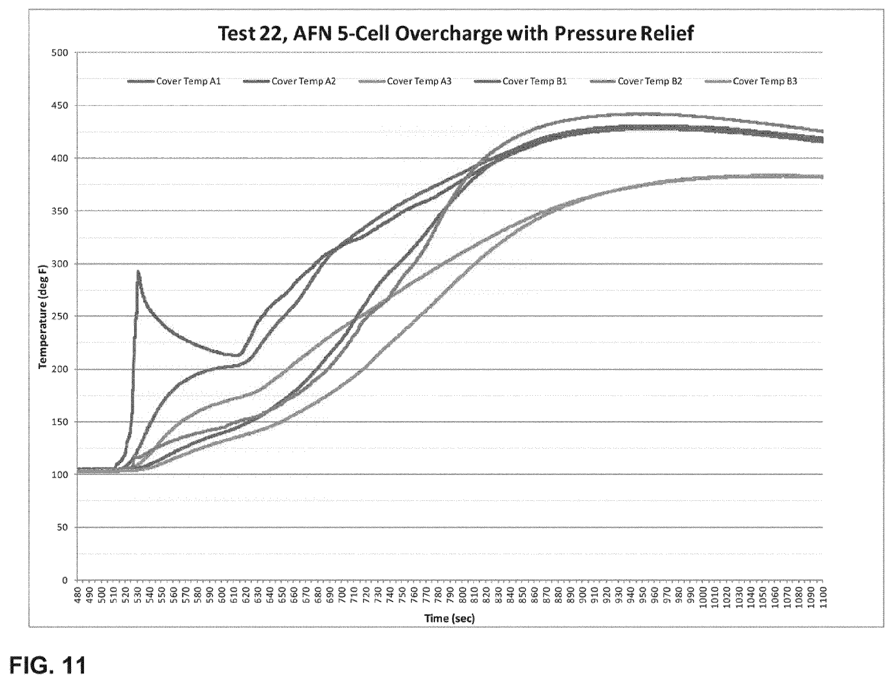

FIG. 11 is a graph that illustrates the temperatures of various covers when a lithium battery experiences an overcharge. While the temperatures rise as a result of the overcharge, it can be noted that the temperature does decrease after the initial increase.

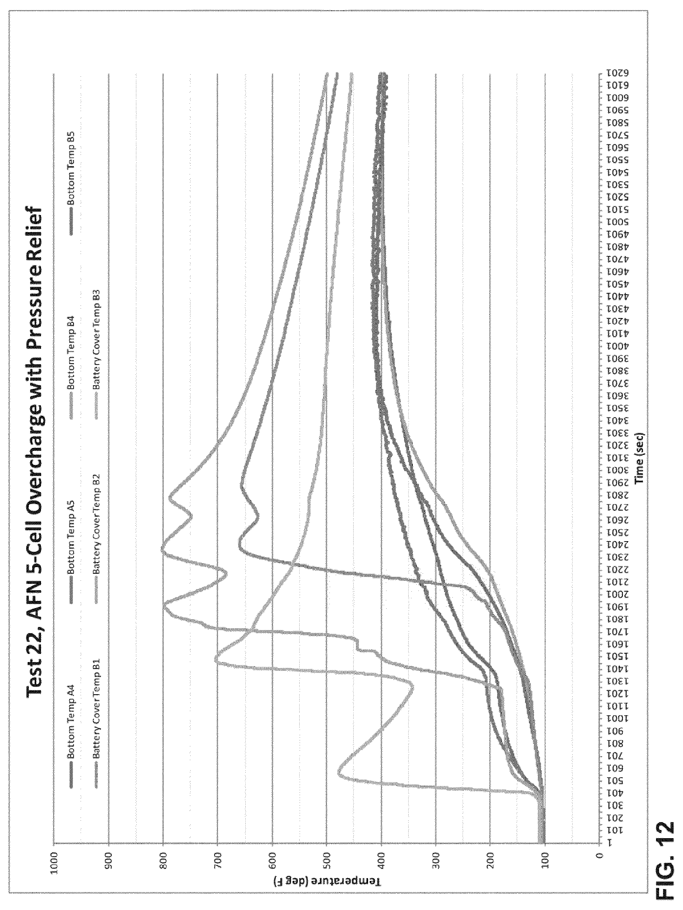

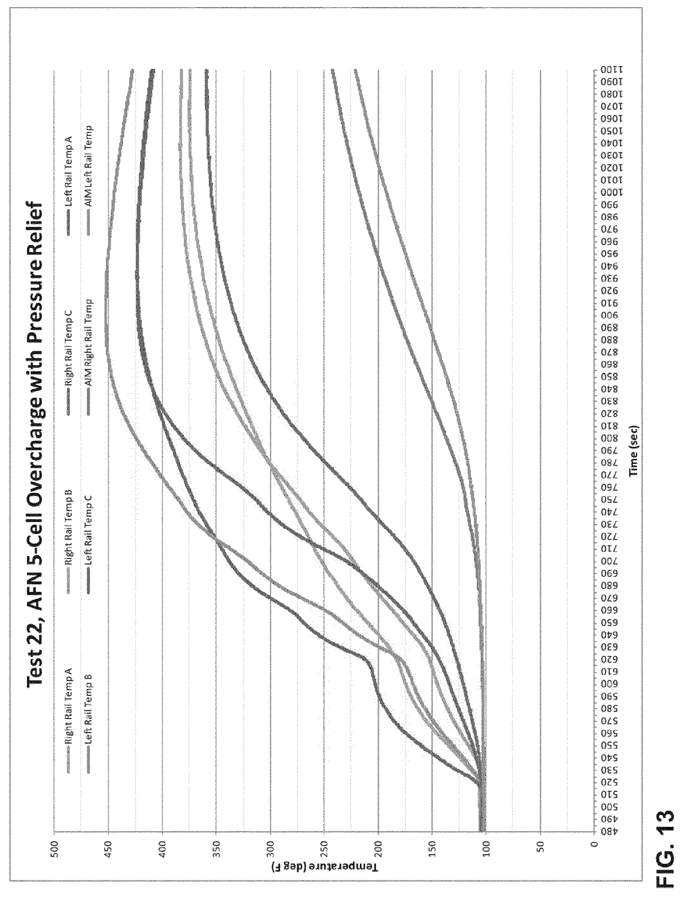

FIG. 12 is a graph illustrating the temperatures of the cover and bottom surfaces of a battery compartment of a test ELT device when a lithium battery experiences an overcharge. Again, temperatures initially rise as a result of the overcharge. However, the battery covers, which are located closest to the area of overcharge, have a faster rate of decrease due to the vent line releasing the harmful gases from the battery compartment. FIG. 13 is a graph illustrating the temperatures of components surrounding an ELT when a lithium battery experiences an overcharge.

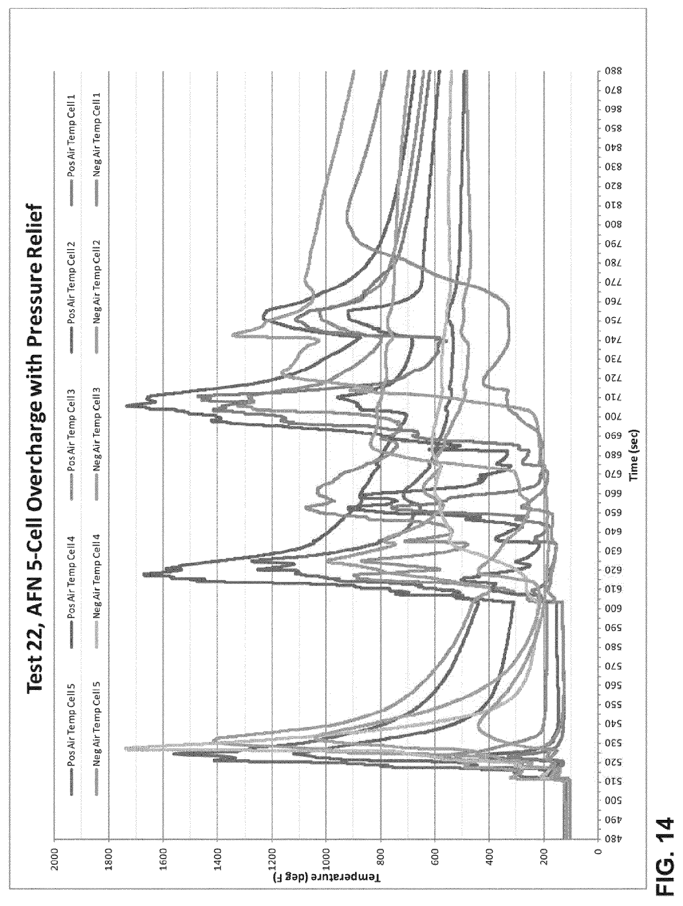

FIG. 14 is a graph illustrating the air temperatures inside the battery compartment of an ELT when a lithium battery experiences an overcharge. Spikes in temperature can be seen at each position of the battery failures. However, it can also be seen that the temperature at each sensor drastically decreases shortly after each spike, showing the effectiveness of the vent line in reducing the temperature inside the battery compartment after the failure of lithium batteries.

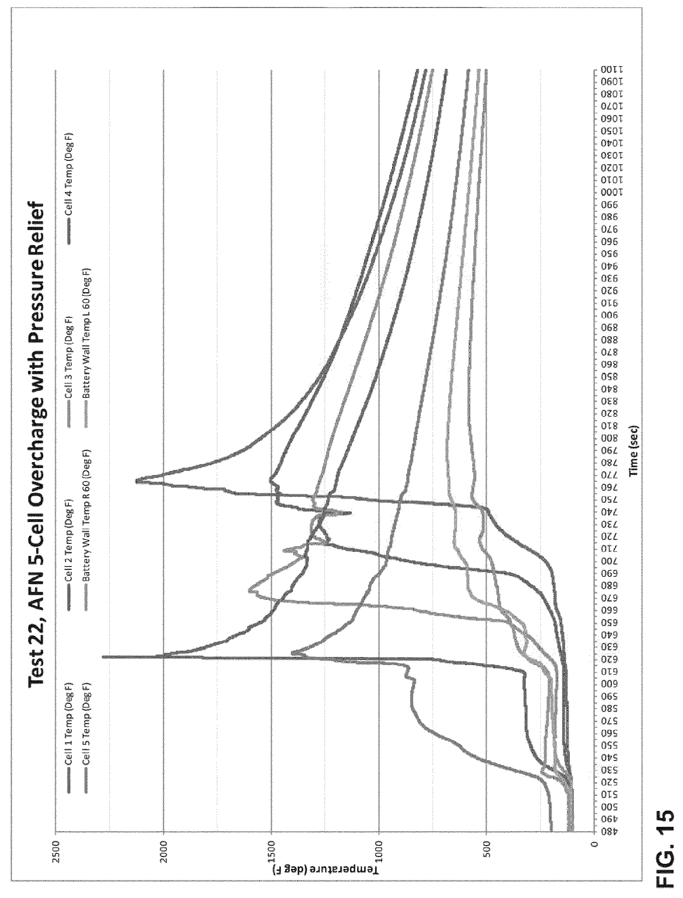

FIG. 15 is a graph illustrating various temperatures of battery cells inside the battery compartment of an ELT when a lithium battery experiences an overcharge. Spikes in temperature for each battery cell can be seen at each position of the battery failures. However, it can also be seen that the temperature at each sensor sharply decreases shortly after each spike before gradually decreasing, showing the effectiveness of the vent line in reducing the temperature inside the battery compartment after the failure of lithium batteries.

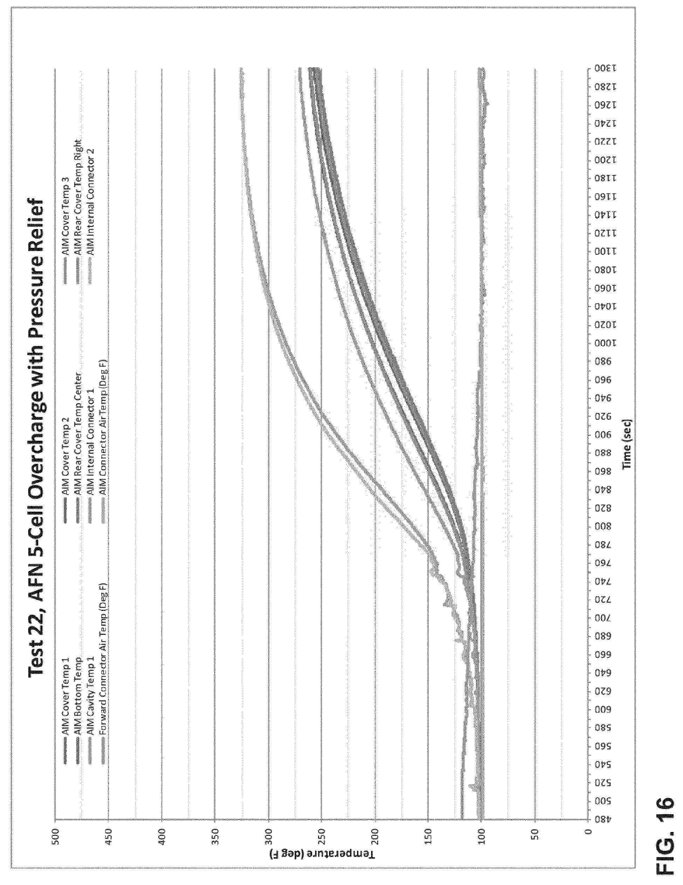

FIG. 16 is a graph illustrating temperatures of various components of an ELT when a lithium battery experiences an overcharge. These components generally rise in temperature, but do not rise to a dangerous level before the temperatures level off. This leveling off is due to the venting of the harmful gases by the vent line in accordance with techniques of the current disclosure. When a lithium battery experiences an overcharge, the voltages were volatile around the times of the overcharge failure.

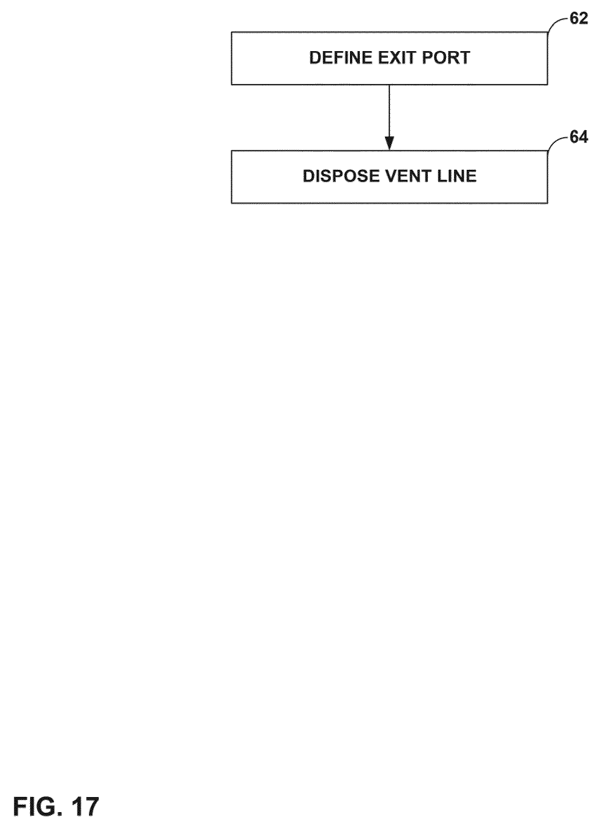

FIG. 17 is a flow diagram illustrating an example process of forming a battery ventilation system to remove extraneous pressure from a battery compartment when a lithium battery fails, in accordance with one or more aspects of the present disclosure. An exit port (e.g., exit port 20) is defined in a housing (e.g., housing 14) (62). In some examples, the housing further contains an antenna. Further, a vent line (e.g., vent line formed by first portion 10 and second portion 16) is disposed between a battery compartment (e.g., battery compartment 6) and the exit port (64). The vent line defines a passageway through which gases in the battery compartment exit the battery. In some examples, the battery compartment may contain a battery (e.g., battery 4). In some examples, the gases are generated by the battery, and the battery may be a lithium battery.

In some examples, the process may further include setting a rupture disk (e.g., rupture disk 8) between the battery and the housing. The rupture disk may be configured to be damaged when the battery fails. Further, the vent line is opened to the battery compartment when the rupture disk is damaged. In some examples, the rupture disk is configured to be damaged by an increase in pressure inside the battery compartment caused by the failing battery.

In some examples, the process may further include disposing a valve between the battery and the housing. The valve may be configured to expose the vent line when a pressure within the battery is greater than a predetermined threshold. In some examples, the pressure relief valve may open when the pressure exceeds a certain pressure, such as a pressure between 20 to 50 pounds per square inch gauge. In other examples, the pressure valve may include a pressure sensor that electrically actuates the pressure valve. For instance, the battery compartment may contain pressure sensors that are configured to open the valve when the pressure in the battery compartment is greater than the predetermined threshold.

In some examples, the process may further include providing an emergency locator transmitter (ELT) (e.g., ELT device 2 of FIG. 2) operatively connected to the battery compartment. In other examples, the process may further include situating the battery compartment inside of an aircraft (e.g., aircraft 30), and situating the housing on an exterior of the aircraft.

Various examples of the disclosure have been described. Any combination of the described systems, operations, or functions is contemplated. These and other examples are within the scope of the following claims.

## Claims

1. A system comprising:
a battery compartment (6);
an antenna assembly comprising:
an antenna housing (14) defining an exit port (20), wherein the antenna housing is outside of the battery compartment;
an antenna housed by the antenna housing; **characterised by**
a vent line extending from the battery compartment to the exit port, wherein the vent line defines a passageway through which gases in the battery compartment exit the battery compartment.

2. The system of claim 1, further comprising:
a battery (4) in the battery compartment; and
a rupture disk (8) between the battery compartment and the antenna housing, wherein the rupture disk is configured to be damaged when the battery fails, wherein the vent line is opened to the battery compartment when the rupture disk is damaged.

3. The system of claim 2, wherein the rupture disk is configured to be damaged by an increase in pressure inside the battery compartment caused by a failure of the battery.

4. The system of any of claims 1-3, further comprising:
a battery in the battery compartment; and
an emergency locator transmitter (ELT) (2) operatively connected to the battery.

5. The system of any of claims 1-4, wherein the battery compartment is located inside of an aircraft (30), and wherein the antenna housing is located on an exterior of the aircraft.

6. The system of any of claims 1-5, further comprising a battery in the battery compartment, wherein the gases are generated by the battery.

7. The system of any of claims 1-6, further comprising a valve between the battery compartment and the antenna housing, wherein the valve is configured to expose the vent line in response to a pressure within the battery compartment being greater than or equal to a predetermined threshold value.

8. A method of forming a battery ventilation system, the method comprising:
defining an exit port (20) in an antenna housing (14), wherein the antenna housing houses an antenna; and
positioning a vent line between a battery compartment and the exit port, wherein the battery compartment contains a battery (4), and wherein the vent line defines a passageway through which gases in the battery compartment exit the battery compartment.

9. The method of claim 8, further comprising:
positioning a rupture disk (8) between the battery compartment and the antenna housing, wherein the rupture disk is configured to be damaged when the battery fails, wherein the vent line is opened to the battery compartment when the rupture disk is damaged.

10. The method of claim 8, further comprising:
disposing a valve between the battery compartment and the antenna housing, wherein the valve is configured to expose the vent line in response to a pressure within the battery compartment being greater than or equal to a predetermined threshold value.

## Patentansprüche

1. System, welches umfasst:
ein Batteriefach (6);
eine Antennenanordnung, welche umfasst:
ein Antennengehäuse (14), das eine Austrittsöffnung (20) definiert, wobei sich das Antennengehäuse außerhalb des Batteriefachs befindet;
eine Antenne, die in dem Antennengehäuse untergebracht ist;
**gekennzeichnet durch** eine Entlüftungsleitung, die sich vom Batteriefach zur Austrittsöffnung erstreckt, wobei die Entlüftungsleitung einen Durchflusskanal definiert, **durch** den Gase im Batteriefach aus dem Batteriefach austreten.

2. System nach Anspruch 1, welches ferner umfasst:
eine Batterie (4) im Batteriefach; und
eine Berstscheibe (8) zwischen dem Batteriefach und dem Antennengehäuse, wobei die Berstscheibe dafür ausgelegt ist, beschädigt zu werden, wenn die Batterie ausfällt, wobei die Entlüftungsleitung zum Batteriefach hin geöffnet wird, wenn die Berstscheibe beschädigt wird.

3. System nach Anspruch 2, wobei die Berstscheibe dafür ausgelegt ist, durch eine Druckerhöhung innerhalb des Batteriefachs beschädigt zu werden, die durch einen Ausfall der Batterie verursacht wird.

4. System nach einem der Ansprüche 1-3, welches ferner umfasst:
eine Batterie im Batteriefach; und
einen Notfallsender (Emergency Locator Transmitter, ELT) (2), der mit der Batterie in Wirkverbindung steht.

5. System nach einem der Ansprüche 1-4, wobei das Batteriefach innerhalb eines Luftfahrzeugs (30) angeordnet ist und wobei das Antennengehäuse auf einer Außenseite des Luftfahrzeugs angeordnet ist.

6. System nach einem der Ansprüche 1-5, welches ferner eine Batterie im Batteriefach umfasst, wobei die Gase von der Batterie erzeugt werden.

7. System nach einem der Ansprüche 1-6, welches ferner ein Ventil zwischen dem Batteriefach und dem Antennengehäuse umfasst, wobei das Ventil dafür ausgelegt ist, die Entlüftungsleitung in Reaktion auf einen Druck innerhalb des Batteriefachs freizulegen, der größer oder gleich einem vorgegebenen Schwellenwert ist.

8. Verfahren zum Ausbilden eines Batterieentlüftungssystems, wobei das Verfahren umfasst:
Definieren einer Austrittsöffnung (20) in einem Antennengehäuse (14), wobei das Antennengehäuse eine Antenne aufnimmt; und
Positionieren einer Entlüftungsleitung zwischen einem Batteriefach und der Austrittsöffnung, wobei das Batteriefach eine Batterie (4) enthält und wobei die Entlüftungsleitung einen Durchflusskanal definiert, durch den Gase im Batteriefach aus dem Batteriefach austreten.

9. Verfahren nach Anspruch 8, welches ferner umfasst:
Positionieren einer Berstscheibe (8) zwischen dem Batteriefach und dem Antennengehäuse, wobei die Berstscheibe dafür ausgelegt ist, beschädigt zu werden, wenn die Batterie ausfällt, wobei die Entlüftungsleitung zum Batteriefach hin geöffnet wird, wenn die Berstscheibe beschädigt wird.

10. Verfahren nach Anspruch 8, welches ferner umfasst:
Anordnen eines Ventils zwischen dem Batteriefach und dem Antennengehäuse, wobei das Ventil dafür ausgelegt ist, die Entlüftungsleitung in Reaktion auf einen Druck innerhalb des Batteriefachs freizulegen, der größer oder gleich einem vorgegebenen Schwellenwert ist.

## Revendications

1. Système comprenant :
un compartiment batterie (6) ;
un ensemble d'antenne comprenant :
un logement d'antenne (14) définissant un port de sortie (20), le logement d'antenne étant extérieur au compartiment batterie ;
une antenne logée dans le logement d'antenne ; **caractérisé par**
une ligne d'évent s'étendant depuis le compartiment batterie jusqu'au port de sortie, la ligne d'évent définissant un passage au travers duquel les gaz dans le compartiment batterie s'échappent du compartiment batterie.

2. Système selon la revendication 1, comprenant en outre :
une batterie (4) dans le compartiment batterie ; et
un disque de rupture (8) entre le compartiment batterie et le logement d'antenne, le disque de rupture étant configuré pour être endommagé quand la batterie tombe en panne, et la ligne d'évent étant ouverte au compartiment batterie quand le disque rupture est endommagé.

3. Système selon la revendication 2, dans lequel le disque de rupture est configuré pour être endommagé par une augmentation de pression à l'intérieur du compartiment batterie causée par une défaillance de la batterie.

4. Système selon l'une quelconque des revendications 1 à 3, comprenant en outre :
une batterie dans le compartiment batterie ; et
un émetteur de localisation d'urgence (ELT) (2) connecté fonctionnellement à la batterie.

5. Système selon l'une quelconque des revendications 1 à 4, dans lequel le compartiment batterie est situé à l'intérieur d'un aéronef (30), et dans lequel le logement d'antenne est situé sur une partie extérieure de l'aéronef.

6. Système selon l'une quelconque des revendications 1 à 5, comprenant en outre une batterie dans le compartiment batterie, dans lequel les gaz sont générés par la batterie.

7. Système selon l'une quelconque des revendications 1 à 6, comprenant en outre une vanne entre le compartiment batterie et le logement d'antenne, la vanne étant configurée pour exposer la ligne d'évent en réponse à une pression dans le compartiment batterie supérieure ou égale à une valeur limite prédéterminée.

8. Procédé de formation d'un système de ventilation de batterie, le procédé comprenant :
la définition d'un port de sortie (20) dans un logement d'antenne (14), le logement d'antenne abritant une antenne ; et
le positionnement d'une ligne d'évent entre un compartiment batterie et le port de sortie, le compartiment batterie contenant une batterie (4), et la ligne d'évent définissant un passage au travers duquel les gaz dans le compartiment batterie s'échappent du compartiment batterie.

9. Procédé selon la revendication 8, comprenant en outre :
le positionnement d'un disque de rupture (8) entre le compartiment batterie et le logement d'antenne, le disque de rupture étant configuré pour être endommagé quand la batterie tombe en panne, et la ligne d'évent étant ouverte au compartiment batterie quand le disque de rupture est endommagé.

10. Procédé selon la revendication 8, comprenant en outre :
le montage d'une vanne entre le compartiment batterie et le logement d'antenne, la vanne étant configurée pour exposer la ligne d'évent en réponse à une pression dans le compartiment batterie supérieure ou égale à une valeur limite prédéterminée.
